# EUROPEAN PATENT APPLICATION

(11) **EP 2 320 631 A1**
(43) Date of publication of application: **11.05.2011**
(21) Application number: 09809461.8
(22) Date of filing: 01.07.2009
(51) Int. Cl.: H04M 3/42

(54) **ANONYMOUS COMMUNICATION SYSTEM**

(30) Priority: 26.08.2008 JP 2008216297
(71) Applicant: NEC Corporation, Minato-ku Tokyo 108-8001 (JP)
(72) Inventor: KAGAWA, Natsuko, Tokyo 108-8001 (JP); MINAMIZAWA, Takeaki, Tokyo 108-8001 (JP)
(74) Representative: Vossius & Partner
(86) International application number: PCT/JP2009/003059
(87) International publication number: WO 2010/023803

(57) **Abstract**

In order to place restrictions on an originating side itself freely selecting an anonymity level on the originating side, a communication establishment device (130), which forms an anonymous communication system, determines whether or not an anonymity level designated by an originating terminal is allowable based on a restrictive condition on anonymity levels, upon receiving from the originating terminal a request for communication connection, in which a destination terminal is designated. When it is determined that the anonymity level is not allowable, the communication establishment device (130) forcibly changes the anonymity level to an allowable anonymity level, and establishes a communication session between the originating terminal and the destination terminal based on the changed anonymity level of the originating terminal.

## Description

### Technical Field

The present invention relates to an anonymous communication system in which communication can be conducted on an anonymous basis, and particularly to an anonymous communication system which can forcibly change an anonymity level between parties communicating with each other.

### Background Art

The anonymous communication refers to a communication which is conducted without revealing identification information for identifying an originating side itself to a communication destination. As an example, Non Patent Literature 1 discloses a caller number notification/non-notification service by a Voice over IP communication network. In this caller number notification/non-notification service, a default setting upon a subscription is provided so as not to notify a caller number, or an originating terminal prefixes "184" to a destination phone number to be dialed without such a setting. This makes it possible to conduct communication where a phone number of the originating terminal is not notified to a destination terminal, in other words, to conduct the anonymous communication. Note that the default setting upon the subscription is provided so as to notify the caller number, or the originating terminal prefixes "186" to the destination phone number to be dialed without such a setting. This makes it possible to notify the phone number of the originating terminal to the destination terminal.

Further, Non Patent Literature 2 discloses a specific number notification service which is also a kind of anonymous communication. In this specific number notification service, when a caller is a subscriber of the specific number notification service, it is possible to notify the destination terminal not of the individual phone number of the originating terminal, but of an incoming account phone number (a kind of representative number) to which the caller subscribes.

### Citation List

### Non Patent Literature

[Non Patent Literature 1]
   NIPPON TELEGRAPH AND TELEPHONE WEST CORPORATION, "Voice over IP communication network service", Version 3.0, 2007-02-01, pp. 11, Number Display, [retrieved on 2008-07-25], Retrieved form the Internet <URL:http://www.ntt-west.co.jp/flets/hikaridenwa_office/download/hikari_office3.0.pdf>
[Non Patent Literature 2]
   NIPPON TELEGRAPH AND TELEPHONE WEST CORPORATION, "Specific number notification service", [retrieved on 2008-07-25], Retrieved form the Internet <URL:http://www.ntt-west.co.jp/flets/hikaridenwa_office/service/bangoutuuchi/index.html>
[Non Patent Literature 3]
   Noburou TANIGUCHI, Koji CHIDA, Osamu SHIONOIRI and Atsushi KANAI, "A note on Anonymity/Pseudonymity/Identity Management of Decentralized Identity Escrow", Technical Report SITE2005-53, THE INSTITUTE OF ELECTRONICS, INFORMATION AND COMMUNICATION ENGINEERS
[Non Patent Literature 4]
   Andreas Pfitzmann and Marit Hansen, "Anonymity, Unlinkability, Undetectability, Unobservability, Pseudonymity, and Identity Management - A Consolidated Proposal for Terminology", [retrieved on 2008-07-25], Retrieved form the Internet <URL: http://dud.inf.tu-dresden.de/literatur/Anon_Terminology_v0.31.pdf>
[Non Patent Literature 5]
   Wikipedia, the free encyclopedia, "Anonymity", [retrieved on 2008-07-25], Retrieved form the Internet
   <URL:http://ja.wikipedia.org/wiki/%E5%8C%BF%E5%90%8D#.E9.96.A 2.E9.80.A3.E9.A0.85.E7.9B.AE>

### Summary of Invention

### Technical Problem

In the above-described anonymous communication system, the originating terminal can freely select one of the communication which is conducted with identification information for identifying the originating terminal itself being revealed to the destination terminal, and the communication which is conducted without revealing the identification information to the contrary. The latter communication is at the highest level of anonymity in that it is not possible for the destination side to obtain any information for identifying the originating side. By contrast, the former communication is at the lowest level of anonymity in that it becomes possible to fully identify the originating side. That is, in the above-described anonymous communication system, it is possible for the originating side to freely select its own anonymity level. However, although there are some advantages of being possible for the originating side itself to freely select the anonymity level on the originating side, there are also considerable adverse effects such as unwanted calls made by misusing the anonymity. Such a wrongful act committed by misusing the anonymity damages the credibility of anonymous communication, and thus it is required to develop a technique for helping prevention of the damage.

Accordingly, the present invention aims to provide an anonymous communication system in which restrictions are placed on an originating side itself freely selecting an anonymity level on the originating side.

### Solution to Problem

An anonymous communication system according to an exemplary aspect of the present invention assigns at least two anonymity levels to communication terminals, and enables each of the communication terminals to conduct communication at any one of the anonymity levels. This anonymous communication system determines whether or not an anonymity level designated by an originating terminal is allowable based on a restrictive condition on anonymity levels, changes the designated anonymity level to an allowable anonymity level when it is determined that the designated anonymity level is not allowable, and establishes a communication session between the originating terminal and a destination terminal based on the changed anonymity level of the originating terminal.

### Advantageous Effects of Invention

According to the present invention, it is determined whether or not an anonymity level designated by an originating terminal is allowable based on a restrictive condition on anonymity levels. When it is determined that the anonymity level is not allowable, the anonymity level is changed to an allowable anonymity level to establish a communication session between the originating terminal and a destination terminal. Therefore, it is possible to place restrictions on an originating side itself freely selecting an anonymity level on the originating side.

### Brief Description of Drawings

Fig. 1 is a block diagram showing an anonymous communication system according to a first exemplary embodiment of the present invention;
Fig. 2 is a diagram showing an example of data which is stored in an anonymity management information storage in the first exemplary embodiment of the present invention;
Fig. 3 is a diagram showing a format example of a restrictive condition on anonymity levels in the first exemplary embodiment of the present invention;
Fig. 4 is a diagram for explaining one operation of the anonymous communication system according to the first exemplary embodiment of the present invention;
Fig. 5 is a diagram showing an example of originating and destination anonymity management information in the first exemplary embodiment of the present invention;
Fig. 6 is a diagram for explaining another operation of the anonymous communication system according to the first exemplary embodiment of the present invention;
Fig. 7 is a diagram showing one example of the restrictive condition on anonymity levels in the first exemplary embodiment of the present invention;
Fig. 8 is a diagram showing another example of the restrictive condition on anonymity levels in the first exemplary embodiment of the present invention;
Fig. 9 is a block diagram showing an anonymous communication system according to a second exemplary embodiment of the present invention;
Fig. 10 is a diagram for explaining operation of the anonymous communication system according to the second exemplary embodiment of the present invention;
Fig. 11 is a block diagram showing a main part of a communication terminal in the second exemplary embodiment of the present invention;
Fig. 12A is a diagram showing one example of a restrictive condition on anonymity levels in the second exemplary embodiment of the present invention; and
Fig. 12B is a diagram showing another example of the restrictive condition on anonymity levels in the second exemplary embodiment of the present invention.

### Description of Embodiments

### [First exemplary embodiment]

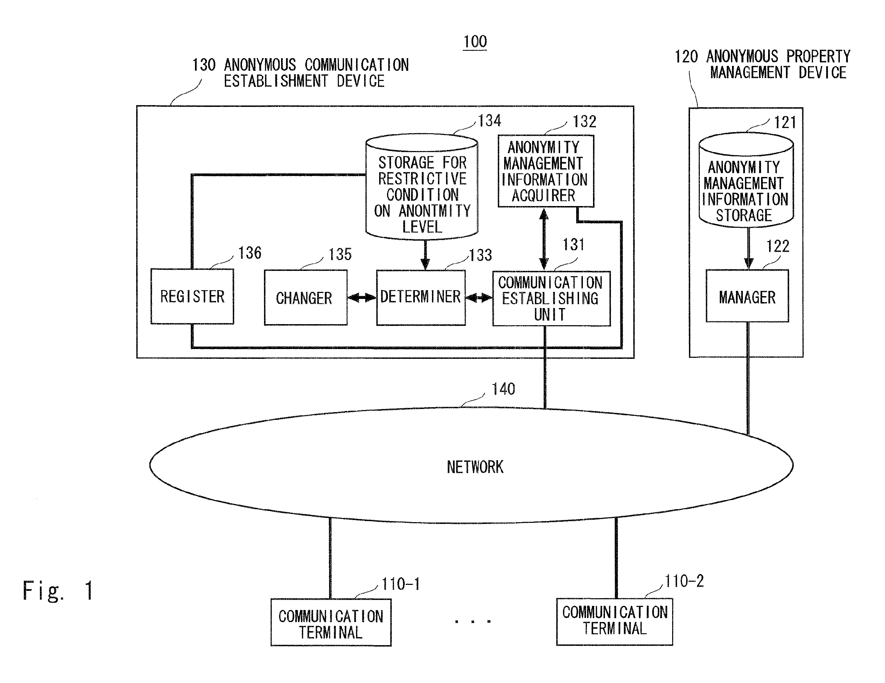

With reference to Fig. 1, in an anonymous communication system 100 according to a first exemplary embodiment of the present invention, a plurality of communication terminals 110, an anonymous property management device 120, and an anonymous communication establishment device 130 are communicably connected to each another through a network 140.

Each of the communication terminals 110 is the one used for the anonymous communication, and in particular, equipment which has a communication function like a mobile phone or a personal computer. Two or more communication addresses which include an identifiable address and an anonymous address are allocated to each of the communication terminals 110.

The identifiable address is an identifier for uniquely identifying each of the communication terminals 110, and in particular, an individual phone number, a SIP-URI, or the like. It is not easy for a user to change the identifiable address. Therefore, when the identifiable address is found out by malicious third persons, there is a risk of threatening the safety of the user such as receiving unwanted communication.

The anonymous address is an identifier which is issued in association with the identifiable address. The correspondence relationship between the identifiable address and the anonymous address is managed in the anonymous communication system, and is never disclosed to the outside which includes a communication destination upon the anonymous communication. Therefore, the identifiable address of the user is never found out from the anonymous address, so that it is possible to conduct the anonymous communication with the safety of the user ensured. Further, even when the anonymous address is found out by the malicious third persons, it is possible to ensure the safety of the user without changing the identifiable address, by disabling or changing the anonymous address.

The anonymous property management device 120 holds and manages anonymity management information on each of the communication terminals 110, and includes an anonymity management information storage 121 and a manager 122.

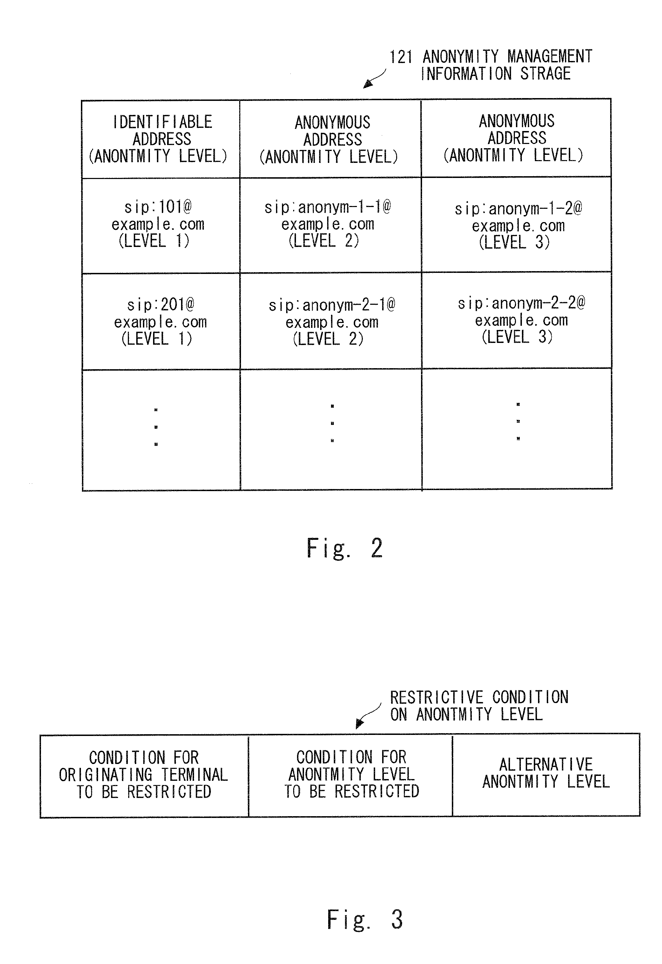

The anonymity management information storage 121 is a database which stores the anonymity management information for each of the communication terminals 110. The individual anonymity management information on each of the communication terminals 110 includes the identifiable address allocated to each of the communication terminals 110, the anonymous address issued in association with the identifiable address, and information on anonymity levels of the identifiable address and the anonymous address. Fig. 2 shows an example of the anonymity management information stored in the anonymity management information storage 121.

With reference to Fig. 2, the anonymity management information in this exemplary embodiment includes the identifiable address allocated to each of the communication terminals 110 and its anonymity level, and two types of anonymous addresses allocated to each of the communication terminals 110 and their anonymity levels. The value "1" representing the anonymity level indicates the lowest degree of anonymity. As the value becomes larger, the degree of anonymity becomes higher. The identifiable address is least anonymous in that the originating side can be fully identified, and thus its anonymity level is set to level 1. There is a difference in anonymity between the two types of anonymous addresses. The anonymity level of less anonymous one among the two types of anonymous addresses is set to level 2 which is the second lowest after the identifiable address, and the anonymity level of more anonymous one is set to level 3.

The difference of anonymity levels between plural anonymous addresses is relative and determined in accordance with whether probability of losing anonymity is high or low. Specific examples of the two types of anonymous addresses which have different anonymities include a pseudonymous address and a group anonymous address.

The pseudonymous address is an address which enables the communication terminal to be uniquely identified within the space of the anonymous address. The group anonymous address is an anonymous address which is allocated commonly to plural communication terminals. While the pseudonymous address corresponds to the communication terminal on a one-to-one basis, the group anonymous address does not correspond to the communication terminal on a one-to-one basis. Therefore, the probability of losing anonymity in a case of the group anonymous address is lower than that in a case of the pseudonymous address. Accordingly, an anonymity level of the pseudonymous address is set to the level 2 next to the identifiable address, and anonymity of the group anonymous address is set to the level 3.

In the anonymity management information shown in Fig. 2, the difference of the anonymity levels between the addresses is clarified by appending the anonymity levels to the identifiable addresses and the anonymous addresses. Meanwhile, the anonymity levels can be omitted by storing the addresses in ascending (or descending) order of anonymity level.

Further, an attribute which characterizes a property of each address may be appended, as a substitute for the anonymity level in the anonymity management information, or in addition to the description of the anonymity level. As an example of the attribute which characterizes the property of the address, Non Patent Literature 3 defines three concepts of Identity, Pseudonymity, and Anonymity. Non Patent Literature 4 defines six concepts of Anonymity, Unlinkability, Undetectability, Unobservability, Pseudonymity, and Identity. Non Patent Literature 5 defines two concepts of Unlinkability and Undeniability. Unlinkability means a property where it can be determined neither who the actor is, nor whether or not certain two acts are committed by the same person. Undeniability means a property where it is not possible to prove to third persons that the act is not committed by the person itself.

The manager 122 in the anonymous property management device 120 is a means for retrieving appropriate anonymity management information from the anonymity management information storage 121 and for responding to the anonymous communication establishment device 130, in response to a request from the anonymous communication establishment device 130 to acquire the anonymity management information.

The anonymous communication establishment device 130 establishes a communication session between the communication terminals 110. The anonymous communication establishment device 130 has a function of determining whether or not an anonymity level designated by an originating terminal is allowable, changing the anonymity level to an allowable anonymity level when it is determined that the anonymity level is not allowable, and establishing a communication session between the originating terminal and a destination terminal based on the changed anonymity level of the originating terminal. The anonymous communication establishment device 130 in this exemplary embodiment includes a communication establishing unit 131, an anonymity management information acquirer 132, a determiner 133, a storage for restrictive condition on anonymity level 134, a changer 135, and a register 136.

The communication establishing unit 131 is a means for establishing the communication session between the originating terminal and the destination terminal when a request for communication connection, in which the destination terminal and the anonymity level are designated, is transmitted from each of the communication terminals 110 via the network 140, and for discarding the established communication session when the communication ends. Upon the establishment of the communication session, the communication establishing unit 131 acquires the anonymity management information on the originating terminal and the anonymity management information on the destination terminal from the anonymous property management device 120 through the anonymity management information acquirer 132, adds information on the anonymity level of the destination terminal designated by the request for communication connection to originating and destination anonymity management information which is composed of the acquired anonymity management information on the originating terminal and the destination terminal to ask determination of the determiner 133, and establishes the communication session between the originating terminal and the destination terminal based on an anonymity level of the originating terminal which is indicated by a result of the determination notified from the determiner 133.

The anonymity management information acquirer 132 is a means for transmitting a request to acquire the anonymity management information on the originating terminal and the anonymity management information on the destination terminal to the anonymous property management device 120 via the network 140 in accordance with instructions from the communication establishing unit 131, for receiving the anonymity management information transmitted as a response to the request from the anonymous property management device 120, and for transmitting the received anonymity management information to the communication establishing unit 131.

The storage for restrictive condition on anonymity level 134 is a database which holds a condition for restricting the anonymity level of the originating terminal. As shown in Fig. 3, a restrictive condition on anonymity levels includes a condition for originating terminals to be restricted, a condition for anonymity levels to be restricted, and an alternative anonymity level.

At least one of a communication address for identifying the originating terminal and a communication address for identifying the destination terminal is set as the condition for originating terminals to be restricted. For example, when an originating terminal having a communication address "X" is the object to be restricted, the communication address "X" of the originating terminal is set as the condition. Further, when all originating terminals which communicate with a destination terminal having a communication address "Y" are the objects to be restricted, the communication address "Y" of the destination terminal is set as the condition. Furthermore, when the originating terminal having the communication address "X" among the originating terminals which communicate with the destination terminal having the communication address "Y" is the object to be restricted, the communication address "X" of the originating terminal and the communication address "Y" of the destination terminal are set as the condition. The communication address set as the condition may be any one of the identifiable address and the anonymity address. Further, the communication address set as the condition may be also a part of the communication address (for example, domain name or area code).

At least one anonymity level to be restricted is set as the condition for anonymity levels to be restricted. For example, in a case of disallowing communication by a group anonymous address at the anonymity level 3, the anonymity level 3 is set as the condition. Further in a case of allowing only communication by an identifiable address at the anonymity level 1 and of disallowing any communication at the anonymity levels 2 and 3, the levels equal to or higher than the anonymity level 2 are set as the condition.

As the alternative anonymity level, an anonymity level which is used as a substitute for the anonymity level of the originating terminal to be restricted is set. For example, in a case of restricting communication at the anonymity level 3 by a certain originating terminal and of forcibly changing the anonymity level upon this communication to the anonymity level 2, the anonymity level 2 is set as the alternative anonymity level. Meanwhile, the alternative anonymity level can be omitted. When the alternative anonymity level is omitted, one anonymity level is selected as the alternative anonymity level from among anonymity levels which are alternatives for the originating terminal and which do not meet the condition for anonymity levels to be restricted.

Note that it is also possible to set information on a period of time to be restricted in the conditions for originating terminals and anonymity levels to be restricted. For example, in a case of restricting communication by a certain originating terminal at a certain anonymity level only during a period from 20 o'clock to 8 o'clock on the next morning, "20:00-8:00" is set as the period of time to be restricted in any one of the conditions for the originating terminal and the anonymity level.

The register 136 is a means for registering the restrictive condition on anonymity levels in the storage for restrictive condition on anonymity level 134. The register 136 receives requests for registration from each of the communication terminals 110 and a different terminal such as a personal computer, which is not shown, through the network 140, and registers a restrictive condition on anonymity levels appended to each of the requests for registration in the storage for restrictive condition on anonymity level 134. Note that upon the registration of the restrictive condition on anonymity levels, the register 136 may authenticate registrants to eliminate the registration by an unauthorized registrant.

The determiner 133 is a means for receiving the originating and destination anonymity management information and the anonymity level designated by the originating terminal from the communication establishing unit 131 upon the reception of the request for communication connection from the originating terminal, in which the destination terminal and the anonymity level are designated, and for determining whether or not the anonymity level designated by the originating terminal is the object to be restricted in communication between originating and destination terminals which are indicated by the originating and destination anonymity management information, based on the restrictive condition on anonymity levels stored in the storage for restrictive condition on anonymity level 134. When it is determined that the anonymity level designated by the originating terminal is not the object to be restricted, the determiner 133 notifies a result of this determination to the communication establishing unit 131. On the other hand, when the anonymity level designated by the originating terminal is the object to be restricted, the determiner 133 notifies the changer 135 of the applied restrictive condition on anonymity levels and the originating and destination anonymity management information, and notifies the communication establishing unit 131 of a result of determination which includes the changed anonymity level of the originating terminal returned by the changer 135.

The changer 135 is a means for determining the allowable anonymity level of the originating terminal in light of the applied restrictive condition on anonymity levels in the communication between the originating and destination terminals which are indicated by the originating and destination anonymity management information received from the determiner 133, and for notifying the determiner 133 of this determined allowable anonymity level. When the alternative anonymity level is set in the applied restrictive condition on anonymity levels, the changer 135 determines this set alternative anonymity level as the allowable anonymity level of the originating terminal. On the other hand, when such an alternative anonymity level is not set, the changer 135 determines e.g. an anonymity level nearest to the anonymity level to be restricted, as the allowable anonymity level of the originating terminal, from among anonymity levels which are stored in the anonymity management information on the originating side in the originating and destination anonymity management information, which are alternatives for the originating terminal, and which do not meet the condition for anonymity levels to be restricted. For example, the changer 135 determines the level 2 when the anonymity level to be restricted is equal to or higher than the level 3, or equal to or lower than the level 1. Note that when a plurality of restrictive conditions on anonymity levels is applied, the changer 135 determines an anonymity level which is not the object to be restricted in any one of the restrictive conditions on anonymity levels. Meanwhile, when the anonymity level which is not the object to be restricted in any one of the restrictive conditions on anonymity levels cannot be determined, the changer 135 notifies the determiner 133 that there is no alternative anonymity level, for example.

Next, an operation example of the anonymous communication system 100 according to this exemplary embodiment will be described. As an example, communication where the communication terminal 110-1 serves as the originating terminal and the communication terminal 110-2 serves as the destination terminal is taken. Assume herein that a user of the communication terminal 110-1 is "A", and a user of the communication terminal 110-2 is "B". Further, assume that anonymity management information on the communication terminal 110-1 includes contents shown in the first line of Fig. 2, and anonymity management information on the communication terminal 110-2 includes contents shown in the second line of Fig. 2.

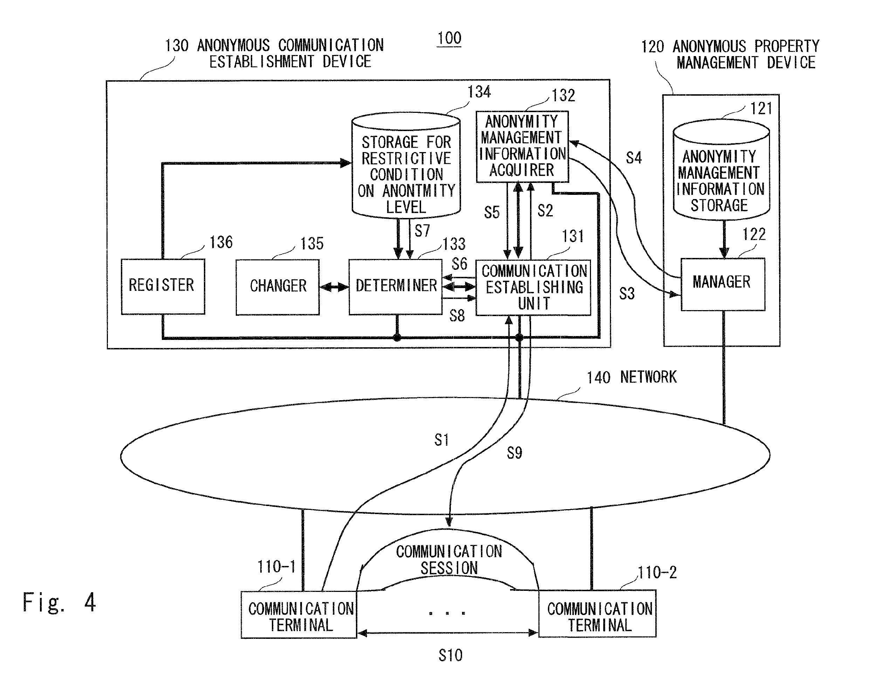

When the user "A" performs operation for calling the user "B" by designating an anonymity level of the originating terminal on the communication terminal 110-1, a request for communication connection is transmitted from the communication terminal 110-1 to the communication establishing unit 131 in the anonymous communication establishment device 130 via the network 140 (Step S1 in Fig. 4). For example, assume that this request for communication connection includes an identifiable address of the communication terminal 110-1 as information for identifying the communication terminal 110-1 serving as the originating terminal, and a pseudonymous address of the communication terminal 110-2 as information for identifying the destination terminal. Further, assume that the anonymity level designated by the originating terminal is level "X" (X is any one of values 1 to 3).

The communication establishing unit 131 transfers the identifiable address of the originating terminal and the pseudonymous address of the destination terminal, which are included in the request for communication connection, to the anonymity management information acquirer 132, and thus requires it to acquire anonymity management information on the originating side and anonymity management information on the destination side (Step S2 in Fig. 4).

The anonymity management information acquirer 132 transmits a request for acquiring anonymity management information which includes the identifiable address of the originating terminal and a request for acquiring anonymity management information which includes the pseudonymous address of the destination terminal to the manager 122 in the anonymous property management device 120 via the network 140 (Step S3 in Fig. 4).

The manager 122 retrieves anonymity management information which includes the same identifiable address as that of the originating terminal and anonymity management information which includes the same pseudonymous address as that of the destination terminal from the anonymity management information storage 121, and transmits the detected anonymity management information to the anonymity management information acquirer 132 via the network 140 (Step S4 in Fig. 4). The anonymity management information acquirer 132 transmits the received anonymity management information to the communication establishing unit 131 (Step S5 in Fig. 4). As a result, the anonymity management information in the first line shown in Fig. 2 is transferred as the anonymity management information on the originating side to the communication establishing unit 131, and the anonymity management information in the second line shown in Fig. 2 is transferred as the anonymity management information on the destination side to the communication establishing unit 131.

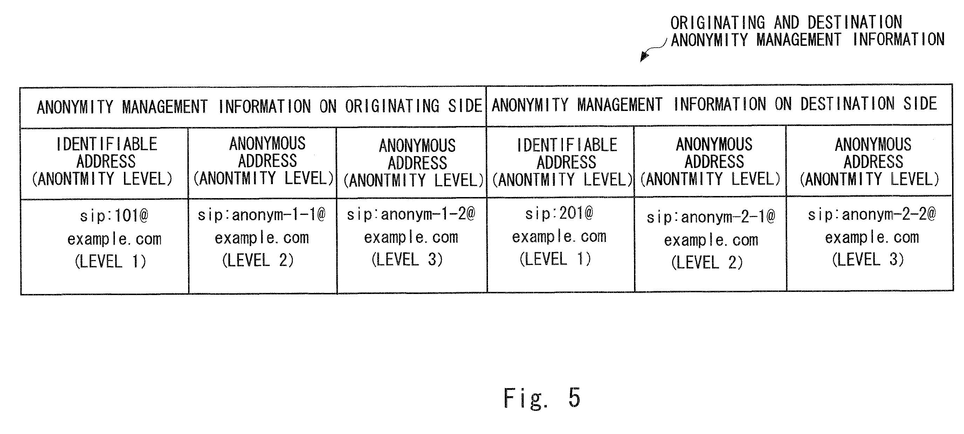

The communication establishing unit 131 generates originating and destination anonymity management information as shown in Fig. 5 which includes the anonymity management information on the originating side and the anonymity management information on the destination side, and appends the anonymity level "X" designated by the originating terminal to this originating and destination anonymity management information to be notified to the determiner 133 (Step S6 in Fig. 4).

The determiner 133 determines whether or not the anonymity level "X" designated by the originating terminal is allowable based on the restrictive conditions on anonymity levels stored in the storage for restrictive condition on anonymity level 134, in the communication between the originating and destination terminals which are indicated by the originating and destination anonymity management information (Step S7 in Fig. 4). Specifically, the determiner 133 determines whether or not the condition for the originating terminal is met in the current communication, for each restrictive condition on anonymity levels stored in the storage for restrictive condition on anonymity level 134. When there is no restrictive condition on anonymity levels where the condition for the originating terminal is met, the determiner 133 notifies the communication establishing unit 131 of a result of determination indicating that the anonymity level "X" designated by the originating terminal is not the object to be restricted. On the other hand, when there are one or more restrictive conditions on anonymity level where the condition for the originating terminal is met, the determiner 133 determines whether or not each condition on anonymity levels is met in the current communication. When there is no restrictive condition on anonymity levels where the condition on anonymity levels is met, the determiner 133 notifies the communication establishing unit 131 of a result of determination indicating that the anonymity level "X" designated by the originating terminal is not the object to be restricted. On the other hand, when there are one or more restrictive conditions on anonymity levels where the condition on anonymity levels is met, the determiner 133 notifies the changer 135 of the existing restrictive condition on anonymity levels and the originating and destination anonymity management information, and waits for the allowable anonymity level to be notified. Then, when the allowable anonymity level is notified from the changer 135, the determiner 133 notifies the communication establishing unit 131 of a result of determination, which includes the allowable anonymity level.

The description will be continued on the assumption that the anonymity level "X" designated by the originating terminal is not the object to be restricted.

The communication establishing unit 131 receives from the determiner 133 the result of the determination indicating that the anonymity level "X" is not the object to be restricted (Step S8 in Fig. 4), and then establishes a communication session between the originating terminal 110-1 and the destination terminal 110-2 based on the anonymity level "X" (Step S9 in Fig. 4). Specifically, the communication establishing unit 131 reads the identifiable address of the communication terminal 110-2 serving as the destination terminal from the anonymity management information on the destination side, and notifies the communication terminal 110-2 serving as the destination terminal of the communication address corresponding to the anonymity level "X" of the communication terminal 110-1 serving as the originating terminal, thereby establishing the communication session between the communication terminals 110-1 and 110-2. Thus, the communication terminals 110-1 and 110-2 start communication through the communication session (Step S10 in Fig. 4).

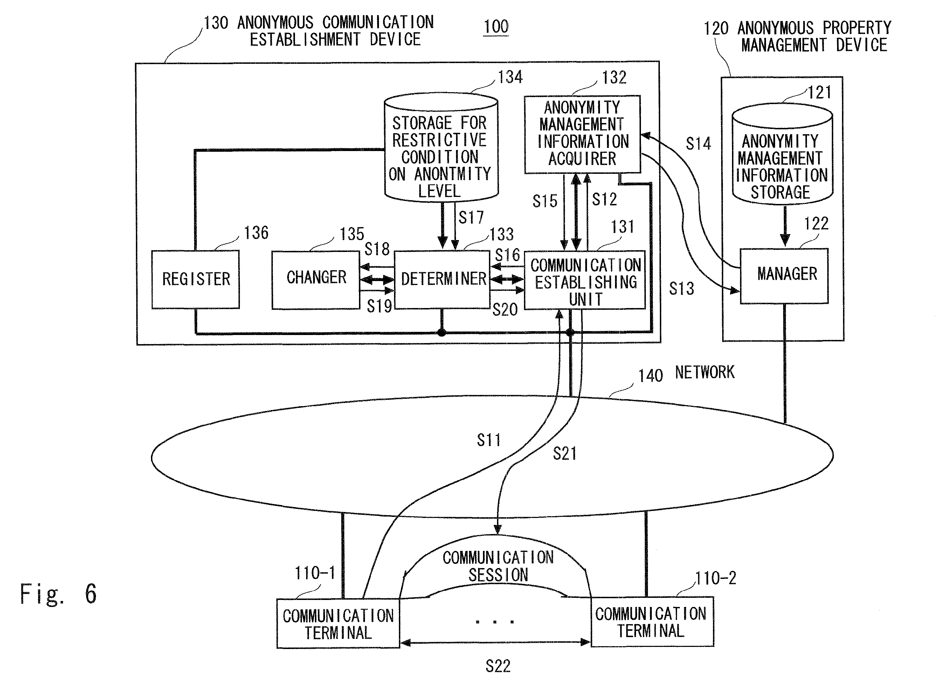

Next, there will be described with reference to Fig. 6 operation in a case where the anonymity level "X" designated by the communication terminal 110-1 is the object to be restricted.

In Fig. 6, Steps S11 to S 17 are similar to Steps S1 to S7 shown in Fig. 4. When it is determined that the anonymity level "X" is the object to be restricted based on the restrictive condition on anonymity levels stored in the storage for restrictive condition on anonymity level 134, the determiner 133 notifies the changer 135 of the originating and destination anonymity management information shown in Fig. 5, which has been received from the communication establishing unit 131, and the applied restrictive condition on anonymity levels (Step S18 in Fig. 6).

The changer 135 determines the allowable anonymity level of the originating terminal in light of the applied restrictive condition on anonymity levels in the communication between the originating and destination terminals which are indicated by the originating and destination anonymity management information, and notifies the determiner 133 of the determined allowable anonymity level (Step S19 in Fig. 6). Assume that the allowable anonymity level of the originating terminal determined by the changer 135 is level "Y".

The determiner 133 receives the anonymity level "Y" from the changer 135, and then notifies the communication establishing unit 131 of a result of determination indicating that the anonymity level "X" is the object to be restricted and thus should be changed to the anonymity level "Y" (Step S20 in Fig. 6). The communication establishing unit 131 receives this result of the determination from the determiner 133, and then establishes a communication session between the originating terminal 110-1 and the destination terminal 110-2 based on the anonymity level "Y" (Step S21 in Fig. 6). Specifically, the communication establishing unit 131 reads the identifiable address of the communication terminal 110-2 serving as the destination terminal from the anonymity management information on the destination side, and notifies the communication terminal 110-2 serving as the destination terminal of the anonymous address corresponding to the anonymity level "Y" of the communication terminal 110-1 serving as the originating terminal, thereby establishing the communication session between the communication terminals 110-1 and 110-2. Thus, the communication terminals 110-1 and 110-2 start communication through the communication session (Step S22 in Fig. 6).

Note that various operations are conceivable in a case where the changer 135 determines that there is no allowable and alternative anonymity level of the originating terminal. For example, the communication establishing unit 131, which has received the notification through the determiner 133, may deny the current request for communication connection or establish a communication session at a default anonymity level preliminarily set.

Next, examples of the application of this exemplary embodiment will be described.

### <First example of application>

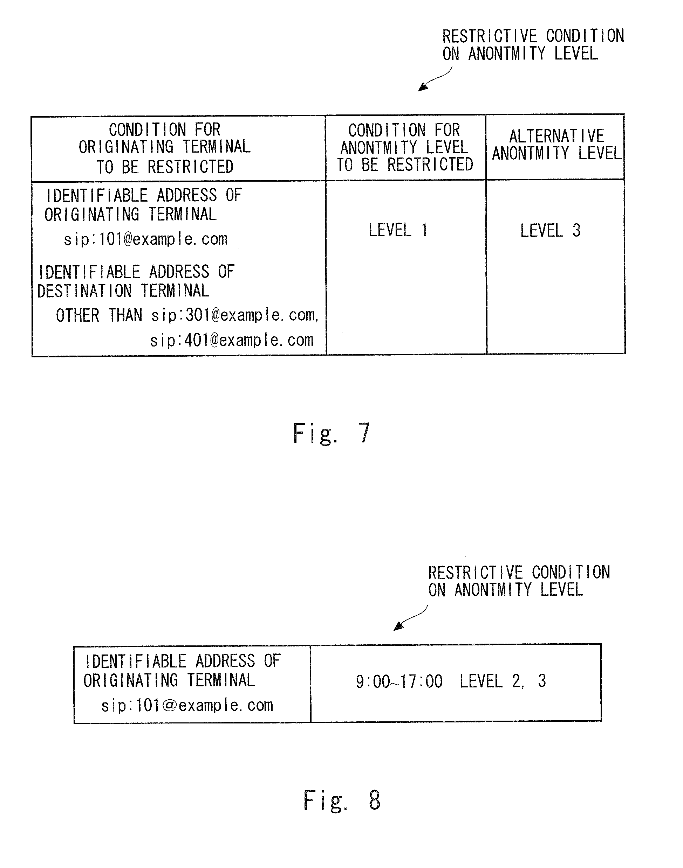

There is described an example of the application where a parent manages an anonymity level of a mobile phone of a child. The parent, who wants to restrict a call between the child and a stranger, registers a restrictive condition on anonymity levels as exemplified in Fig. 7 in the storage for restrictive condition on anonymity level 134 through the register 136 from the parent's own mobile phone or the like. In Fig. 7, "sip:101@example.com" is the identifiable address of the communication terminal 110-1, but is treated as an identifiable address of the mobile phone given to the child. Further, "sip:301@example.com" and "sip:401@example.com" are identifiable addresses of the parent's mobile phone. The restrictive condition on anonymity levels in Fig. 7 indicates that the object to be restricted is communication at an anonymity level "1" where the child's mobile phone serves as originating side and a mobile phone other than the parent's mobile phone serves as the destination side, and that the anonymity level is forcibly changed to an anonymity level "3" if a request for connecting such communication is made.

When the communication terminal 110-1 issues a request for communication connection at the anonymity level "1" to the communication terminal 110-2 which has e.g. "sip:201 @example.com" as the identifiable address in a situation where the restrictive condition on anonymity levels as shown in Fig. 7 is registerd in the storage for restrictive condition on anonymity level 134 in the anonymous communication establishment device 130, the determiner 133 in the anonymous communication establishment device 130 determines that the communication recognized by the originating and destination anonymity management information shown in Fig. 5 meets the condition for originating terminals to be restricted in Fig. 7, and that the anonymity level "1" designated by the originating side meets the condition for anonymity levels to be restricted. As a result, the changer 135 sets the anonymity level "3" as the alternative anonymity level, and the communication establishing unit 131 establishes a communication session at the anonymity level "3" between the communication terminals 110-1 and 110-2. Therefore, the identifiable address of the communication terminal 110-1 is concealed from the communication terminal 110-2. Instead, a group anonymous address at the anonymity level "3" is notified to the destination side.

On the other hand, when the communication terminal 110-1 issues a request for communication connection at the anonymity level "2" or "3" to the communication terminal 110-2, or when the communication terminal 110-1 issues a request for communication connection at an arbitrary anonymity level to the parent's mobile phone, the determiner 133 determines that the communication is not the object to be restricted. As a result, a communication session with the communication destination is established at the anonymity level designated by the originating side.

### <Second example of application >

There is described an example of the application where a usable anonymity level is restricted according to a period of time. For example, in a case of restricting use of the anonymity levels "2" and "3" during office hours on the use of a mobile phone lent by a company to an employee, the company registers a restrictive condition on anonymity levels as exemplified in Fig. 8 in the storage for restrictive condition on anonymity level 134 through the register 136. In Fig. 8, "sip:101 @example.com" is the identifiable address of the communication terminal 110-1, but is treated as an identifiable address of the mobile phone lent to the employee. In the restrictive condition on anonymity levels in Fig. 8, the object to be restricted is communication where the mobile phone lent to the employee serves as the originating side, and which is conducted at the anonymity level "2" or "3" during a period from 9 o'clock to 17 o'clock.

When the communication terminal 110-1 issues a request for communication connection at the anonymity level "3" to the communication terminal 110-2 which has e.g. "sip:201 @example.com" during the period from 9 o'clock to 17 o'clock in a situation where the restrictive condition on anonymity levels as shown in Fig. 8 is registered in the storage for restrictive condition on anonymity level 134 in the anonymous communication establishment device 130, the determiner 133 in the anonymous communication establishment device 130 determines that the communication recognized by the originating and destination anonymity management information shown in Fig. 5 meets the condition for originating terminals to be restricted in Fig. 8, and that the anonymity level "3" designated by the originating side meets the condition for anonymity levels to be restricted. As a result, the changer 135 obtains the anonymity level "1" as the alternative anonymity level, and the communication establishing unit 131 establishes a communication session at the anonymity level "1" between the communication terminals 110-1 and 110-2. Therefore, the identifiable address of the communication terminal 110-1 is notified to the communication terminal 110-2 on the destination side.

On the other hand, when the communication terminal 110-1 issues to the communication terminal 110-2 a request for communication connection at the anonymity level "1" during the period from 9 o'clock to 17 o'clock, or a request for communication connection at an arbitrary anonymity level during a different period of time, the determiner 133 determines that the communication is not the object to be restricted. As a result, a communication session is established at the anonymity level designated by the originating side between the communication terminals 110-1 and 110-2.

Next, advantageous effects of this exemplary embodiment will be described.

According to this exemplary embodiment, it is possible to materialize the anonymous communication system where restrictions are placed on the originating side itself freely selecting the anonymity level on the originating side.

Further, according to this exemplary embodiment, it is possible to arbitrarily set originating terminals and anonymity levels to be restricted depending on the contents of the restrictive condition on anonymity levels stored in the storage for restrictive condition on anonymity level 134.

### [Second exemplary embodiment]

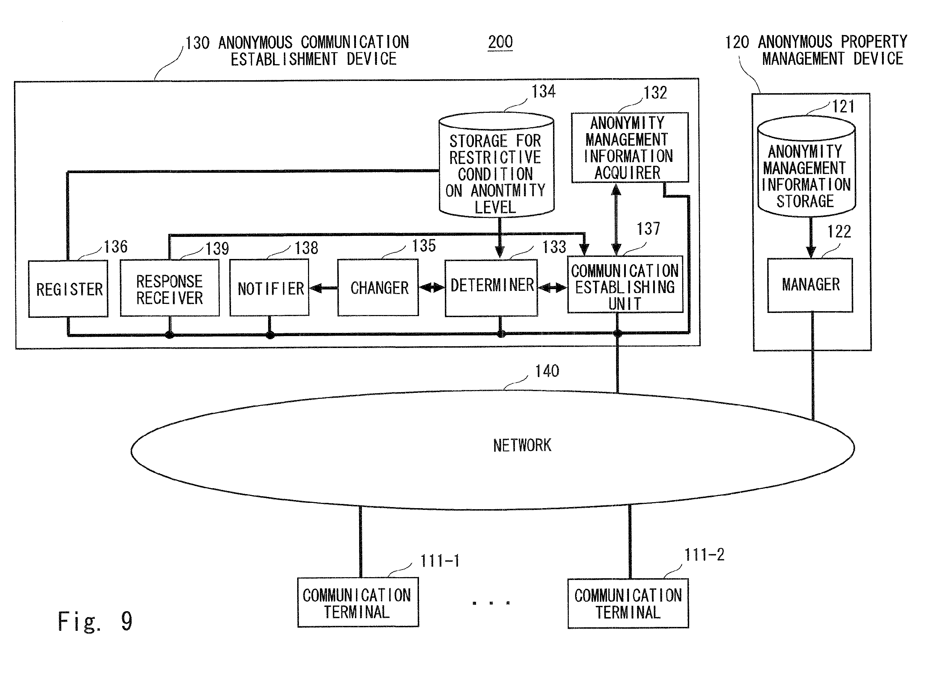

With reference to Fig. 9, an anonymous communication system 200 according to a second exemplary embodiment of the present invention is different from the anonymous communication system 100 shown in Fig. 1 according to the first exemplary embodiment in further including a notifier 138 and a response receiver 139 in the anonymous property management device 130, including a communication establishing unit 137 as a substitute for the communication establishing unit 131, and including communication terminals 111 as substitutes for the communication terminals 110. In other respects, the anonymous communication system 200 is similar to the anonymous communication system 100 according to the first exemplary embodiment.

Each of the communication terminals 111 includes a function of receiving the alternative anonymity level notified from the notifier 138 in the anonymous communication establishment device 130 and of presenting the received alternative anonymity level to the user, and a function of selectively transmitting to the anonymous communication establishment device 130 one of an allowance response and a disallowance response with respect to changing the anonymity level to the alternative one to establish the communication session, in addition to the functions of the each of the communication terminals 110 in the first exemplary embodiment.

The notifier 138 is a means for receiving the alternative anonymity level and the information on the originating terminal from the changer 135, and for notifying the alternative anonymity level via the network 140 to each of the communication terminals 111 each serving as the originating terminal.

The response receiver 139 is a means for receiving from each of the communication terminals 111 a response to the notification by the notifier 138, and for notifying the communication establishing unit 137 of the response.

The communication establishing unit 137 further includes a function of determining whether or not to establish the communication session at the alternative anonymity level in accordance with a result of the response of the each of the communication terminals 111 notified from the response receiver 139, in addition to the functions of the communication establishing unit 137 in the first exemplary embodiment. Specifically, the communication establishing unit 137 establishes the communication session at the alternative anonymity level, only when the response is the allowance response.

Next, there will be described an operation example of the anonymous communication system 200 according to this exemplary embodiment. As an example, communication where the communication terminal 111-1 serves as the originating terminal and the communication terminal 111-2 serves as the destination terminal is taken. Assume herein that a user of the communication terminal 111-1 is "A", and a user of the communication terminal 111-2 is "B". Further, assume that anonymity management information on the communication terminal 111-1 includes contents shown in the first line of Fig. 2, and anonymity management information on the communication terminal 111-2 includes contents shown in the second line of Fig. 2.

Among the operations of the anonymous communication system 200 according to this exemplary embodiment, an operation in a case where the anonymity level "X" designated by the originating terminal is not the object to be restricted is similar to that in the first exemplary embodiment.

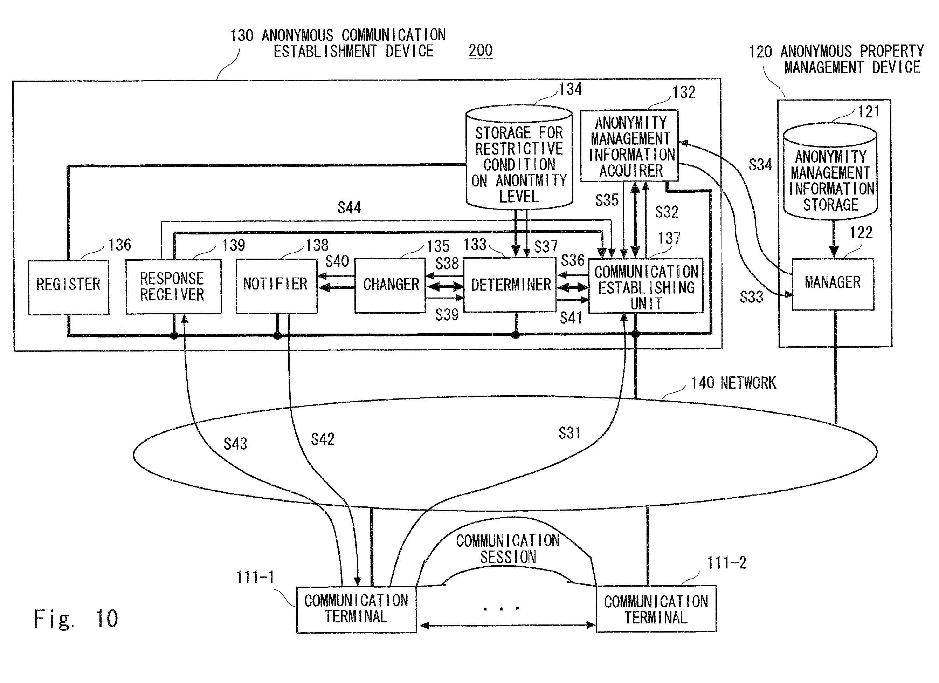

Among the operations of the anonymous communication system 200 according to this exemplary embodiment, an operation in a case where the anonymity level "X" designated by the originating terminal 111-1 is the object to be restricted is described below with reference to Fig. 10.

In Fig. 10, Steps S31 to S37 are similar to Steps S11 to S 17 shown in Fig. 6. When it is determined that the anonymity level "X" is the object to be restricted based on the restrictive condition on anonymity levels stored in the storage for restrictive condition on anonymity level 134, the determiner 133 notifies the changer 135 of the originating and destination anonymity management information shown in Fig. 5, which has been received from the communication establishing unit 131, and the applied restrictive condition on anonymity levels (Step S38 in Fig. 10).

The changer 135 determines the allowable anonymity level of the originating terminal in light of the applied restrictive condition on anonymity levels in the communication between the originating and destination terminals which are indicated by the originating and destination anonymity management information, and notifies the determiner 133 of the determined allowable anonymity level (Step S39 in Fig. 10). Assume herein that the allowable anonymity level of the originating terminal determined by the changer 135 is the anonymity level "Y". At the same time, the determiner 133 notifies the notifier 138 of the identifiable address of the originating terminal and the changed anonymity level "Y" (Step S40 in Fig. 10).

The determiner 133 receives the anonymity level "Y" from the changer 135, and then notifies the communication establishing unit 137 of a result of determination indicating that the anonymity level "X" is the object to be restricted and thus should be changed to the anonymity level "Y" (Step S41 in Fig. 10). The communication establishing unit 131 receives this result of the determination from the determiner 133, and then waits for a result of the response to be transmitted from the response receiver 139.

The notifier 138 transmits information for notifying that the anonymity level is forcibly changed to "Y" to the communication terminal 111-1 which is identified by the identifiable address notified from the changer 135 (Step S42 in Fig. 10).

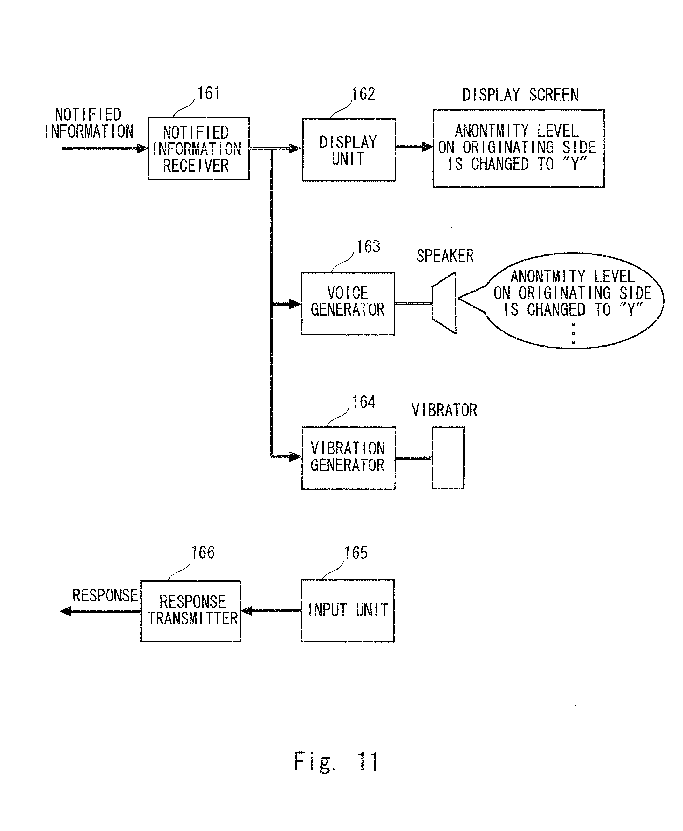

The communication terminal 111-1 receives the notified information, and then presents it to the user "A". A method for the presentation may include displaying on a display screen, outputting by voice or sound, outputting by vibration, or a combination thereof. Fig. 11 shows an example of configuration for presenting the notified information. In this example, a notified information receiver 161 receives from the notifier 138 the notified information to be transmitted to a display unit 162, a voice generator 163, and a vibration generator 164. The display unit 162 displays the contents notified by the information, in other words, the notification indicating that the anonymity level of the originating terminal is forcibly changed to the anonymity level "Y", on a screen such as a liquid crystal display. Further, the voice generator 163 outputs the same contents by sound from a voice-output element such as a speaker. Furthermore, the vibration generator 164 vibrates a vibrator according to e.g. a vibrational pattern associated with each anonymity level on a one-to-one basis, thereby notifying the user "A" of the changed anonymity level.

Further, the communication terminal 111-1 is provided with an input unit 165 such as a keyboard, and a response transmitter 166. The user "A" recognizes that the user's own anonymity level is forcibly changed to the anonymity level "Y" based on e.g. the screen which displays the contents of the notified information received from the notifier 138 in the anonymous communication establishment device 130, inputs instructions for allowance through the input unit 165 if the user "A" accepts the anonymity level "Y", and inputs instructions for disallowance if the user "A" denies the anonymity level "Y". The response transmitter 166 generates response information which includes the input instructions, and transmits the response information to the response receiver 139 in the anonymous communication establishment device 130 via the network 140 (Step S43 in Fig. 10).

The response receiver 139 receives the response from the communication terminal 111-1 via the network 140, and then notifies the communication establishing unit 137 of the received response (Step S44 in Fig. 10).

The communication establishing unit 137 does not establish the communication session, when it receives the disallowance response from the response receiver 139 after receiving from the determiner 133 the notification indicating that the anonymity level should be changed from "X" to "Y". On the other hand, when the allowance response is received from the response receiver 139, the communication establishing unit 137 establishes the communication session at the anonymity level "Y". Note that the communication establishing unit 137 may assume that the disallowance response is made or that the allowance response is made, if no response is received from the response receiver 139 within a certain period of time after the notification indicating that the anonymity level should be changed from "X" to "Y" is received from the determiner 133.

Various operations are conceivable in a case where the changer 135 determines that there is no allowable and alternative anonymity level of the originating terminal. For example, the communication establishing unit 131, which has received the determination through the determiner 133, may deny the current request for communication connection or establish a communication session at a default anonymity level preliminarily set. In this case, the notifier 138 may notify the originating terminal of a reason for denying the request for communication connection, or may notify that the communication session is established at the anonymity level set by default.

Next, an example of the application of this exemplary embodiment will be described.

### <First example of application>

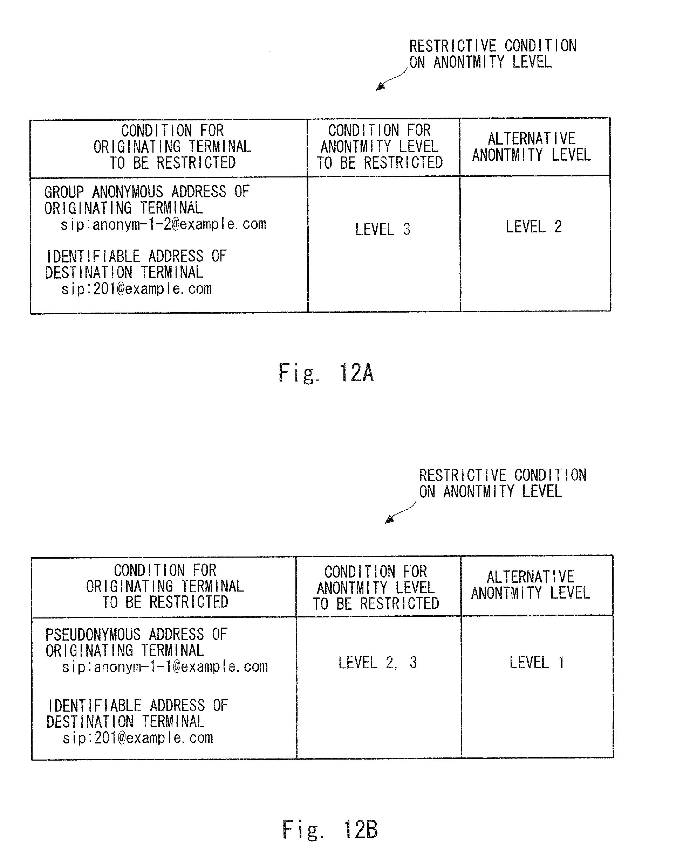

There is described an example of the application where unwanted calls are prevented from being made by misusing a communication address having high anonymity. When the communication terminal 111-1 serves as the originating terminal and the communication terminal 111-2 serves as the destination terminal, and when a request for communication connection is issued with a group anonymous address, a communication session is established between the communication terminals 111-1 and 111-2 by using the group anonymous address designated by the originating terminal and thus communication is conducted therebetween, under a situation where a restrictive condition on anonymity levels for restricting such a communication is not stored in the storage for restrictive condition on anonymity level 134. At this time, assume that the user "B" of the communication terminal 111-2 considers this incoming call as the one based on a wrongful act such as a malicious call or an unwanted call. The communication address of the originating terminal which is displayed on the communication terminal 111-2 upon the incoming call is the group anonymous address. Therefore, the user "B" cannot indentify who commits the wrongful act. In order to deter such a wrongful act, the user "B" registers, as a measure at the first stage, a restrictive condition on anonymity levels as exemplified in Fig. 12A in the storage for restrictive condition on anonymity level 134 through the register 136 by using the communication terminal 111-2, for example.

In Fig. 12A, "sip:anonym-1-2@example.com" is the group anonymous address of the communication terminal 111-1, and "sip:201 @example.com" is the identifiable address of the communication terminal 111-2. The restrictive condition on anonymity levels in Fig. 12A indicates that the object to be restricted is communication where a communication terminal which has the group anonymous address "sip:anonym-1-2@example.com" requires connection at the anonymity level "3" to a communication terminal which has the identifiable address "sip:201@example.com", and that the anonymity level is forcibly changed to the anonymity level "2" if a request for connecting such communication is made.

When the communication terminal 111-1 issues a request for communication connection to the communication terminal 111-2 by using the group anonymous address again in a situation where the restrictive condition on anonymity levels as shown in Fig. 12A is registered in the storage for restrictive condition on anonymity level 134 in the anonymous communication establishment device 130, the determiner 133 in the anonymous communication establishment device 130 determines that the communication recognized by the originating and destination anonymity management information shown in Fig. 5 meets the condition for originating terminals to be restricted in Fig. 12A, and that the anonymity level "3" designated by the originating side meets the condition for anonymity levels to be restricted. As a result, the changer 135 sets the anonymity level "2" as the alternative anonymity level, and the notifier 138 notifies the communication terminal 111-1 on the originating side of a message indicating that the anonymity level is forcibly changed to the anonymity level "2".

Since the pseudonymous address is less anonymous than the group anonymous address, it is disadvantageous for a wrongful actor to commit a wrongful act such as a malicious call by the pseudonymous address. Therefore, a deterrent effect is exerted, and thus the user "A" of the communication terminal 111-1 is led to give up the wrongful act.

Further, since the group anonymous address is the anonymous address which is allocated commonly to a plurality of communication terminals, a good person other than the wrongful actor can also communicate with the communication terminal 111-2 by using the same group anonymous address. In this case, if the restrictive condition on anonymity levels as shown in Fig. 12A is registered, a request for communication connection with the group anonymous address issued by the good person is forcibly changed to the request for communication connection with the pseudonymous address. However, unlike the wrongful actor, if the good person wants to communicate with the communication terminal 111-2 on an anonymous basis, there is really not much difference between the group anonymous address and the pseudonymous address. It is believed that many persons allow the pseudonymous address with the same anonymity, while they may not often allow it if the forcibly changed level is the level "1", in other words, the identifiable address. This is also why the alternative anonymity level is set not to the level "1" but to the level "2" at the first stage.

If the deterrent effect as described above does not work, and thus the user "A" of the communication terminal 111-1 still repeats the wrongful act such as a malicious call to the communication terminal 111-2 even after the user's own anonymity level is forcibly changed to the pseudonymous address (at this time, the pseudonymous address of the communication terminal 111-1 is displayed upon the incoming call at the communication terminal 111-2), the user "B" of the communication terminal 111-2 registers, as a measure at the second stage, a restrictive condition on anonymity levels as exemplified in Fig. 12B in the storage for restrictive condition on anonymity level 134 through the register 136, as a substitute for the restrictive condition on anonymity levels in Fig. 12A.

In Fig. 12B, "sip:anonym-1-1@example.com" is the pseudonymous address of the communication terminal 111-1. The restrictive condition on anonymity levels in Fig. 12B indicates that the object to be restricted is communication where a communication terminal which has the pseudonymous address "sip:anonym-1-1 @example.com" requests connection at the anonymity level "2" or "3" to the communication terminal 111-2 whose identifiable address is "sip:201@example.com", and that the anonymity level is forcibly changed to the anonymity level "1" if a request for connecting such communication is made.

When the communication terminal 111-1 issues a request for communication connection to the communication terminal 111-2 by using the group anonymous address again (or by using the pseudonymous address) in a situation where the restrictive condition on anonymity levels as shown in Fig. 12B is stored in the storage for restrictive condition on anonymity level 134 in the anonymous communication establishment device 130, the determiner 133 in the anonymous communication establishment device 130 determines that the communication recognized by the originating and destination anonymity management information shown in Fig. 5 meets the condition for originating terminals to be restricted in Fig. 12B, and that the anonymity level "3" (or the anonymity level "2") designated by the originating terminal meets the condition for anonymity levels to be restricted. As a result, the changer 135 sets the anonymity level "1" as the alternative anonymity level, and the notifier 138 notifies the communication terminal 111-1 on the originating side of a message indicating that the anonymity level is forcibly changed to the anonymity level "1".

Since the anonymity level "1" corresponds to the identifiable address, a wrongful act such as a malicious call by using the identifiable address is fatal to the wrongful actor. Therefore, the deterrent effect works greatly, and thus it acts strongly to make the user "A" of the communication terminal 111-1 give up the wrongful act.

Further, the restrictive condition on anonymity levels in Fig. 12B is registered as a substitute for the restrictive condition on anonymity levels in Fig. 12A. Thus, when a good person other than the wrongful actor requests connection to the communication terminal 111-2 by using the same group anonymous address, a communication session is established by the group anonymous address.

Next, advantageous effects of this exemplary embodiment will be described.

According to this exemplary embodiment, it is possible to preliminarily notify the originating terminal of the alternative anonymity level upon forcibly changing the anonymity level of the originating terminal which is the object to be restricted to the alternative anonymity level, in addition to achieving the same effects as those of the first exemplary embodiment.

Further, according to this exemplary embodiment, it is possible to establish the communication session at the alternative anonymity level after the permission of the user of the originating terminal is obtained.

### [Other exemplary embodiments]

The present invention is not limited to the above-mentioned exemplary embodiments, and various additional modifications can be made as follows.

In the above-mentioned exemplary embodiments, communication which meets the condition for originating terminals to be restricted is immediately treated as the object to be restricted. Meanwhile, when the number of communications meeting the condition is held and it meets a condition on the number of communications which is set in the restrictive condition on anonymity levels, the communication may be regarded as the wrongful communication due to an unwanted call or the like, and then may be firstly treated as the object to be restricted. For example, when a condition that "the number of communications is equal to or more than three per day" is set in the condition for originating terminals to be restricted in the restrictive condition on anonymity levels shown in Fig. 12A, this restrictive condition on anonymity levels indicates that the object to be restricted is communication where a communication terminal which has the group anonymous address "sip:anonym-1-2@example.com" requests connection at the anonymity level "3" to a communication terminal whose identifiable address is "sip:201 @example.com" three or more times a day, and that the anonymity level is forcibly changed to the anonymity level "2" if a request for connecting such communication is made.

In the above-mentioned exemplary embodiments, a location of the originating terminal is not particularly taken into consideration. Meanwhile, a condition on the location of the originating terminal may be included in the condition for originating terminals to be restricted. Examples of the condition on the location of the originating terminal include treating the originating terminal as the object to be restricted in a case where a distance from a certain reference position (for example, a location of a company for which the user of the originating terminal works) is equal to or less than a predetermined value (otherwise, equal to or more than the predetermined value), or in a case where a distance to the destination terminal is equal to or less than a predetermined value (otherwise, equal to or more than the predetermined value).

In the above-mentioned exemplary embodiments, a relationship between a plurality of communications which are temporally adjacent to each other is not particularly taken into consideration. Meanwhile, a condition on whether or not a callback to the previous call is made may be included in the condition for originating terminals to be restricted. There are the following two methods of determining whether or not the callback is made.

One method is a method of generating and registering a new restrictive condition on anonymity levels where the originating terminal and the destination terminal are reversed, upon the registration of the restrictive condition on anonymity levels. For example, upon registration of a restrictive condition on anonymity levels which includes the identifiable address "sip:101@example.com" of the originating terminal and the identifiable address "sip:301@example.com" of the destination terminal as the condition for originating terminals to be restricted, the register 136 generates a restrictive condition on anonymity levels which includes the identifiable address "sip:301@example.com" of the originating terminal and the identifiable address "sip:101@example.com" of the destination terminal as the condition for originating terminals to be restricted, and registers the generated restrictive condition on anonymity levels in the storage for restrictive condition on anonymity level 134. At this time, an anonymity level of the callback to the previous call may be restricted so as to be identical to that of the previous call, by setting out e.g. "all levels" in the condition for anonymity levels to be restricted and setting out "anonymity level of the previous call causing the callback" in the alternative anonymity level.

Another method is a method of appending "callback" to the condition for originating terminals to be restricted, upon the registration of the restrictive condition on anonymity levels, so that the determiner 133 refers to histories of the transmitted calls to determine whether or not the callback is made. For example, if there is registered a restrictive condition on anonymity levels where "callback" is appended to the condition for originating terminals to be restricted, in which the identifiable address "sip:301@example.com" of the originating terminal and the identifiable address "sip:101@example.com" of the destination terminal are included, the determiner 133 checks whether or not a history of the call transmitted in communication where the originating side and the destination side are reversed is stored in the histories of the calls transmitted within a certain past period of time, when the current communication meets the condition that the identifiable address of the originating terminal is "sip:301@example.com" and the identifiable address of the destination terminal is "sip:101@example.com". Then, the determiner 133 determines the currently transmitted call as the callback, only when the history is stored. Note that contents of a restriction on the anonymity level in a case where it is determined that the callback is made include e.g. a restriction so as to be identical to the anonymity level of the previous call as described above.

In the above-mentioned exemplary embodiments, the anonymity level of the originating terminal is designated in the request for communication connection. Meanwhile, for example, the anonymous communication establishment device may be provided with an originating anonymity level storage means for storing a default anonymity level in a case where each communication terminal serves as the originating terminal, and the communication establishing unit, which has received the request for communication connection, may read the anonymity level of the originating terminal from the originating anonymity level storage means. At this time, if the anonymity level is designated in the request for communication connection, the communication establishing unit may prioritize this anonymity level. If the anonymity level is not designated, the communication establishing unit may use the default anonymity level.

In the above-mentioned exemplary embodiments, a total of three communication addresses having different anonymity levels, i.e. an identifiable address and two anonymous addresses, are allocated to each communication terminal. Meanwhile, the number of communication addresses assigned to each communication terminal may be one, two, three, or more so far as the anonymous communication system assigns at least two anonymity levels to each communication terminal and enables it to conduct communication at any one of the anonymity levels. For example, the caller number notification/non-notification service by the Voice over IP communication network disclosed in Non Patent Literature 1 is one example of the anonymous communication system which conducts communication at two anonymity levels by one communication address. In a case of applying the present invention to this anonymous communication system, even when an originating terminal makes a call so as not to notify a caller number, the call may be forcibly changed so as to notify the caller number and may be received at a communication destination.

In the above-mentioned exemplary embodiments, the anonymous address corresponding to the identifiable address of the communication terminal is preliminarily generated and stored in the anonymous property management device 120. Meanwhile, this anonymous address may be dynamically generated. In this case, the manager 122 in the anonymous property management device 120 is provided with, for example, a function of generating the anonymous address from the identifiable address of the communication terminal. The manager 122 receives the request for acquiring anonymity management information which includes the identifiable address from the anonymity management information acquirer 132 in the anonymous communication establishment device 130. At this time, if there is no appropriate anonymity management information in the anonymity management information storage 121, or if it is necessary to generate another anonymous address different from the previous one because its anonymous property is e.g. Unlinkability even when there is the appropriate anonymity management information, the manager 122 generates an anonymous address which has a desired anonymity level from the received identifiable address, registers anonymity management information, which is composed of the identifiable address, the generated anonymous address, and the anonymity level, in the anonymity management information storage 121, and transmits this anonymity management information to the anonymity management information acquirer 132.

Note that the anonymous address whose anonymous property is Unlinkability is referred to as a one-time anonymous address. The one-time anonymous address is temporarily assigned, and thus the probability that the correspondence relationship with the identifiable address is found out by third persons is lower than that of the group anonymous address. Accordingly, the one-time anonymous address is more anonymous than the group anonymous address. It is also possible for the present invention to use the one-time anonymous address, in addition to the pseudonymous address and group anonymous address described above.

In the above-mentioned exemplary embodiments, the anonymity management information on all of the communication terminals is managed by one anonymous property management device 120. Meanwhile, the anonymity management information may be dispersively managed by a plurality of anonymous property management devices 120.

In the above-mentioned exemplary embodiments, one anonymous communication establishment device 130 recognizes the identifiable address of the communication terminal on the originating side and the identifiable address of the communication terminal on the destination side to establish the communication session between the both communication terminals. Meanwhile, in order to prevent one anonymous communication establishment device from finding out both the identifiable addresses on the originating side and the destination side, the establishment of the communication session may be shared by a plurality of anonymous communication establishment devices. Specifically, a first communication establishment device, which has received from an originating terminal a request for communication connection including an identifiable address on the originating side and an anonymous address on the destination side, establishes a communication session with a communication terminal identified by the identifiable address on the originating side, and transmits to a second communication establishment device the anonymous address on the destination side and an anonymous address on the originating side in anonymous property management information on the originating side which is acquired from the anonymous property management device. The second communication establishment device acquires anonymous property management information which includes an identifiable address corresponding to the anonymous address on the destination side from the anonymous property management device, and establishes a communication session with a communication terminal identified by the identifiable address on the destination side. Finally, the communication session established by the first communication establishment device and the communication session established by the second communication establishment device are connected to generate a communication session which is used for communication between the originating side and the destination side.

It is also possible to materialize the respective functions which are included in the anonymous communication establishment device, the anonymous property management device, and the communication terminal in each of the above-described exemplary embodiments, not only by hardware but also by computers and software.

This application is based upon and claims the benefit of priority from Japanese patent application No. 2008-216297, filed on August 26, 2008, the disclosure of which is incorporated herein in its entirety by reference.

### Industrial Applicability

The present invention is applicable to a system and a method in which restrictions are placed on an anonymity level designated by an originating side based on a preset restriction condition on anonymity levels, in anonymous communication system conducted between communication terminals such as mobile phones through the Internet, Next Generation Network (NGN), or the like.

### Reference Signs List

- 100, 200: ANONYMOUS COMMUNICATION SYSTEM
- 110, 111: COMMUNICATION TERMINAL
- 120: ANONYMOUS PROPERTY MANAGEMENT DEVICE
- 130: ANONYMOUS COMMUNICATION ESTABLISHMENT DEVICE
- 140: NETWORK

## Claims

1. An anonymous communication system that assigns at least two anonymity levels to communication terminals, and that enables each of the communication terminals to conduct communication at any one of the anonymity levels,
the system determining whether or not an anonymity level designated by an originating terminal is allowable based on a restrictive condition on anonymity levels, changing the designated anonymity level to an allowable anonymity level when it is determined that the designated anonymity level is not allowable, and establishing a communication session between the originating terminal and a destination terminal based on the changed anonymity level of the originating terminal.

2. The anonymous communication system according to Claim 1, comprising an anonymous communication establishment means for establishing a communication session between the communication terminals,
wherein the anonymous communication establishment means includes:
a determination means for determining whether or not the anonymity level designated by the originating terminal is allowable based on the restrictive condition on anonymity levels, upon receiving from the originating terminal a request for communication connection, in which the destination terminal is designated;
an anonymity level change means for changing the designated anonymity level to the allowable anonymity level, when the determination means determines that the designated anonymity level is not allowable; and
a communication establishment means for selectively performing a process to establish communication session between the originating terminal and the destination terminal based on the designated anonymity level of the originating terminal or a process to establish communication session between the originating terminal and the destination terminal based on the changed anonymity level of the originating terminal, in accordance with a result of the determination by the determination means.

3. The anonymous communication system according to Claim 2, wherein the anonymity level change means determines, when an alternative anonymity level is set in the applied restrictive condition on anonymity levels, the set alternative anonymity level as the allowable anonymity level, and determines, when the alternative anonymity level is not set, an anonymity level nearest to an anonymity level to be restricted as the allowable anonymity level, among anonymity levels that do not meet the condition on anonymity levels.

4. The anonymous communication system according to Claim 2 or 3, wherein the anonymous communication establishment means further includes a notification means for notifying the originating terminal of the anonymity level changed by the anonymity level change means.

5. The anonymous communication system according to Claim 4, wherein the anonymous communication establishment means further includes a response reception means for receiving from the originating terminal a response to the notification by the notification means,
wherein the communication establishment means determines, based on the response received by the response reception means, whether or not to establish the communication session based on the changed anonymity level of the originating terminal.

6. The anonymous communication system according to Claim 5, wherein the communication establishment means establishes the communication session based on the changed anonymity level of the originating terminal, when the response received by the response reception means is an allowance response.

7. The anonymous communication system according to Claim 5, wherein the communication establishment means does not establish the communication session based on the changed anonymity level of the originating terminal, when the response received by the response reception means is a disallowance response.

8. The anonymous communication system according to any one of Claims 2 to 7, further comprising an anonymous property information storage means for holding anonymity management information that includes an identifiable address and at least one anonymous address of each of the communication terminals, and information on an anonymity level of each of the addresses, wherein
the anonymous communication establishment means further includes a anonymity management information acquisition means for acquiring anonymity management information on the originating terminal and anonymity management information on the destination terminal from the anonymous property management means,
the anonymity level change means selects the allowable anonymity level from among anonymity levels included in the acquired anonymity management information on the originating terminal, and
the communication establishment means establishes the communication session between an originating terminal and a destination terminal that are identified by identifiable addresses included in the acquired anonymity management information.

9. The anonymous communication system according to any one of Claims 2 to 8, wherein the anonymous communication establishment means further includes a storage means for restrictive condition on anonymity levels for storing the restrictive condition on anonymity levels.

10. The anonymous communication system according to any one of Claims 1 to 9, wherein the restrictive condition on anonymity levels includes conditions for an originating terminal and an anonymity level to be restricted.

11. The anonymous communication system according to Claim 10, wherein the condition for the originating terminal to be restricted includes at least one of a communication address for identifying the originating terminal and a communication address for identifying the destination terminal.

12. The anonymous communication system according to Claim 11, wherein the condition for the originating terminal to be restricted includes a condition on the number of communications.

13. The anonymous communication system according to Claim 11, wherein the condition for the originating terminal to be restricted includes a condition on a location of the terminal.

14. The anonymous communication system according to Claim 11, wherein the condition for the originating terminal to be restricted includes a condition on whether or not a callback is made.

15. The anonymous communication system according to Claim 10, wherein the conditions for the originating terminal and the anonymity level to be restricted include information on a period of time to be restricted.

16. The anonymous communication system according to any one of Claims 8 to 15, wherein at least one of a pseudonymous address that is more anonymous than the identifiable address, a group anonymity level that is more anonymous than the pseudonymous address, and a one-time anonymity level that is more anonymous than the group anonymity level is allocated to each of the communication terminals.

17. An anonymous communication method of assigning at least two anonymity levels to communication terminals, and of enabling each of the communication terminals to conduct communication at any one of the anonymity levels, the method comprising:
determining whether or not an anonymity level designated by an originating terminal is allowable, based on a restrictive condition on anonymity levels;
changing the designated anonymity level to an allowable anonymity level, when it is determined that the designated anonymity level is not allowable; and
establishing a communication session between the originating terminal and a destination terminal, based on the changed anonymity level of the originating terminal.

18. The anonymous communication method according to Claim 17, including:
determining whether or not the anonymity level designated by the originating terminal is allowable based on the restrictive condition on anonymity levels, upon receiving from the originating terminal a request for communication connection, in which the destination terminal is designated;
changing the designated anonymity level to the allowable anonymity level, when it is determined that the designated anonymity level is not allowable; and
selectively establishing a communication session between the originating terminal and the destination terminal based on the designated anonymity level of the originating terminal or a communication session between the originating terminal and the destination terminal based on the changed anonymity level of the originating terminal, in accordance with a result of the determination.

19. An anonymous communication establishment device that is provided in an anonymous communication system, the system assigning at least two anonymity levels to communication terminals and enabling each of the communication terminals to conduct communication at any one of the anonymity levels,
the device determining whether or not an anonymity level designated by an originating terminal is allowable based on a restrictive condition on anonymity levels, changing the designated anonymity level to an allowable anonymity level when it is determined that the designated anonymity level is not allowable, and establishing a communication session between the originating terminal and a destination terminal based on the changed anonymity level of the originating terminal.

20. The anonymous communication establishment device according to Claim 19, including:
a determination means for determining whether or not the anonymity level designated by the originating terminal is allowable based on the restrictive condition on anonymity levels, upon receiving from the originating terminal a request for communication connection, in which the destination terminal is designated;
an anonymity level change means for changing the designated anonymity level to the allowable anonymity level, when the determination means determines that the designated anonymity level is not allowable; and
a communication establishment means for selectively performing a process to establish a communication session between the originating terminal and the destination terminal based on the designated anonymity level of the originating terminal and a process to establish a communication session between the originating terminal and the destination terminal based on the changed anonymity level of the originating terminal, in accordance with a result of the determination by the determination means.

21. A communication terminal that forms an originating terminal in an anonymous communication system, the system assigning at least two anonymity levels to communication terminals and enabling each of the communication terminals to conduct communication at any one of the anonymity levels, the system including an anonymous communication establishment device that determines whether or not an anonymity level designated by the originating terminal is allowable based on a restrictive condition on anonymity levels, changes the designated anonymity level to an allowable anonymity level when it is determined that the designated anonymity level is not allowable, notifies the originating terminal of the changed anonymity level of the originating terminal, and establishes a communication session between the originating terminal and a destination terminal based on the changed anonymity level of the originating terminal,
the communication terminal comprising:
a means for receiving the notification of the changed anonymity level of the originating terminal from the anonymous communication establishment device, and for outputting contents of the notification in one or more output forms of characters, voice, and vibration.

22. A communication terminal that forms an originating terminal in an anonymous communication system, the system assigning at least two anonymity levels to communication terminals and enabling each of the communication terminals to conduct communication at any one of the anonymity levels, the system including an anonymous communication establishment device that determines whether or not an anonymity level designated by the originating terminal is allowable based on a restrictive condition on anonymity levels, changes the designated anonymity level to an allowable anonymity level when it is determined that the designated anonymity level is not allowable, notifies the originating terminal of the changed anonymity level of the originating terminal, and establishes a communication session between the originating terminal and a destination terminal based on the changed anonymity level of the originating terminal upon receiving an allowance response as a response to the notification,
the communication terminal comprising:
a means for receiving the notification of the changed anonymity level of the originating terminal from the anonymous communication establishment device, and for outputting contents of the notification in one or more output forms of characters, voice, and vibration; and
a means for transmitting the response to the notification to the anonymous communication establishment device.

23. A storage medium that stores a program executed by a computer forming an anonymous communication establishment device, the device being provided in an anonymous communication system, the system assigning at least two anonymity levels to communication terminals and enabling each of the communication terminals to conduct communication at any one of the anonymity levels,
the program causing the computer to execute:
a determination process to determine whether or not an anonymity level designated by an originating terminal is allowable based on a restrictive condition on anonymity levels, upon receiving from the originating terminal a request for communication connection, in which a destination terminal is designated;
an anonymity level change process to change the designated anonymity level to an allowable anonymity level, when it is determined that the designated anonymity level is not allowable; and
a communication establishment process to selectively perform a process to establish a communication session between the originating terminal and the destination terminal based on the designated anonymity level of the originating terminal and a process to establish a communication session between the originating terminal and the destination terminal based on the changed anonymity level of the originating terminal, in accordance with a result of the determination.

24. A storage medium that stores a program executed by a computer forming a communication terminal, the terminal serving as an originating terminal in an anonymous communication system, the system assigning at least two anonymity levels to communication terminals and enabling each of the communication terminals to conduct communication at any one of the anonymity levels, the system including an anonymous communication establishment device that determines whether or not an anonymity level designated by the originating terminal is allowable based on a restrictive condition on anonymity levels, changes the designated anonymity level to an allowable anonymity level when it is determined that the designated anonymity level is not allowable, notifies the originating terminal of the changed anonymity level of the originating terminal, and establishes a communication session between the originating terminal and a destination terminal based on the changed anonymity level of the originating terminal,
the program causing the computer to execute a process to receive the notification of the changed anonymity level of the originating terminal from the anonymous communication establishment device, and to output contents of the notification in one or more output forms of characters, voice, and vibration.

25. A storage medium that stores a program executed by a computer forming a communication terminal, the terminal serving as an originating terminal in an anonymous communication system, the system assigning at least two anonymity levels to communication terminals and enabling each of the communication terminals to conduct communication at any one of the anonymity levels, the system including an anonymous communication establishment device that determines whether or not an anonymity level designated by the originating terminal is allowable based on a restrictive condition on anonymity levels, changes the designated anonymity level to an allowable anonymity level when it is determined that the designated anonymity level is not allowable, notifies the originating terminal of the changed anonymity level of the originating terminal, and establishes a communication session between the originating terminal and a destination terminal based on the changed anonymity level of the originating terminal upon receiving an allowance response as a response to the notification,
the program causing the computer to execute:
a process to receive the notification of the changed anonymity level of the originating terminal from the anonymous communication establishment device, and to output contents of the notification in one or more output forms of characters, voice, and vibration; and
a process to transmit the response to the notification to the anonymous communication establishment device.
